# EUROPEAN PATENT APPLICATION

(11) **EP 4 804 016 A1**
(43) Date of publication of application: **09.09.2026**
(21) Application number: 25192361.1
(22) Date of filing: 29.07.2025
(51) Int. Cl.: G06F 8/41, G06F 8/51

(54) **SOURCE CODE CONVERSION SYSTEM**

(30) Priority: 03.03.2025 JP 2025633152
(71) Applicant: Nomura Research Institute, Ltd., Chiyoda-ku Tokyo 100-0004 (JP)
(72) Inventor: Oishi, Rina, Chiyoda-ku, Tokyo, 100-0004 (JP); Iwamatsu, Koki, Chiyoda-ku, Tokyo, 100-0004 (JP); Kunou, Gouichirou, Chiyoda-ku, Tokyo, 100-0004 (JP); Morizumi, Satoshi, Chiyoda-ku, Tokyo, 100-0004 (JP); Kamata, Shinsuke, Chiyoda-ku, Tokyo, 100-0004 (JP)
(74) Representative: Hoffmann Eitle

(57) **Abstract**

There are provided a design document creation unit that creates a detailed design document related to COBOL code by generative AI from the COBOL code, a conversion processing unit that creates Python code, obtained by converting the COBOL code into Python by the generative AI from information including the COBOL code and the detailed design document, an execution test unit that detects the presence or absence of an error from an execution result based on the Python code, and a correction processing unit that corrects the Python code based on a cause of the error by the generative AI when the execution test unit detects the error.

## Description

### BACKGROUND OF THE INVENTION

### 1. TECHNICAL FIELD

The present invention relates to a source code generation technique, and more particularly, to a technique that is effective when being applied to a source code conversion system that converts source code of COBOL into source code of Python (Registered trademark, the same applies hereinafter).

### 2. DESCRIPTION OF THE RELATED ART

In an existing basic system (so-called "legacy system"), there is a problem in coping with lack of maintenance support of operating hardware or software, and migration such as changing a use language of an application may be performed when the system is renewed. In the legacy system, COBOL is often used as a use language of an application, and various techniques for converting source code of COBOL into another language have been studied.

For example, Japanese Patent No. 6199278 describes a program conversion system that improves maintainability of a Java (Registered trademark, the same applies hereinafter) source program converted from a COBOL source program using a COPY statement. In addition, Japanese Patent No. 7287725 discloses a source code conversion device capable of converting source code including a GOTO statement described in the COBOL language into highly readable source code described in the Java language.

In recent years, conversion of source code of COBOL into another language using generative artificial intelligence (AI) has also been implemented. For example, a service for converting source code of COBOL into Python using AI is available in "COBOL to Python snippet converter", [online], Recruitize Pty Ltd, [searched on November 15, 2024], Internet <URL:https://products.codeporting.app/ja/convert/ai/cobol-to-python/> disclose, and a method for converting a program of COBOL into Java using generative AI such as ChatGPT (registered trademark) is described in "COBOL can be decrypted using generative AI! Explanation regarding method for conversion into Java", [online], WEEL Inc., [searched on November 15, 2024], Internet <URL:https://weel.co.jp/media/innovator/gen-ai-cobol/>.

### SUMMARY OF THE INVENTION

In recent years, cases where Python is used as a language of source code in a system or an application are increasing, and cases where source code of COBOL of a legacy system is converted into Python and migrated are also increasing. However, in the related art, it is not always possible to obtain sufficient conversion accuracy due to a great difference in language characteristics between COBOL and Python, generative AI characteristics, and the like.

Therefore, an object of the present invention is to provide a source code conversion system that converts source code of COBOL into Python with high accuracy. The above-described object, other objects, and novel features of the present invention will become apparent from the description herein and the accompanying drawings.

A representative embodiment of the invention disclosed in the present application will be briefly outlined as follows.

A source code conversion system, which is the representative embodiment of the present invention, is a source code conversion system that converts first source code in COBOL into second source code in another language, and includes: a design document creation unit that creates design information related to the first source code from the first source code by generative AI; a conversion processing unit that creates the second source code obtained by converting the first source code into the another language by the generative AI from information including the first source code and the design information; an execution test unit that detects the presence or absence of an error from an execution result based on the second source code; and a correction processing unit that corrects the second source code based on a cause of the error by the generative AI when the error is detected by the execution test unit.

An effect of the representative embodiment of the invention disclosed in the present application will be briefly described as follows. That is, according to the representative embodiment of the present invention, the source code of COBOL can be converted into Python with high accuracy.

### BRIEF DESCRIPTION OF THE DRAWINGS

FIG. 1 is a diagram illustrating an outline of a configuration example of a source code conversion system that is an embodiment of the present invention;
FIG. 2 is a flowchart illustrating an outline of an example of a flow of processing of source code conversion in the embodiment of the present invention;
FIG. 3 is a view illustrating an outline of an example of a prompt for extracting a constant definition used in COBOL code 21 in the embodiment of the present invention;
FIG. 4 is a view illustrating an outline of an example of a prompt for extracting a key item from the COBOL code 21 in the embodiment of the present invention;
FIG. 5 is a view illustrating an outline of an example of a prompt for creating a detailed design document 22 from the COBOL code 21 in the embodiment of the present invention;
FIG. 6 is a view illustrating an outline of an example of a prompt for converting the COBOL code 21 into Python to obtain Python code 23 in the embodiment of the present invention;
FIG. 7 is a view illustrating an outline of the example of the prompt for converting the COBOL code 21 into Python to obtain the Python code 23 in the embodiment of the present invention;
FIG. 8 is a view illustrating an outline of an example of a prompt for obtaining a unit of division when the COBOL code 21 is converted into Python in the embodiment of the present invention;
FIG. 9 is a view illustrating an outline of an example of a prompt for obtaining information regarding a method for correcting a runtime error in the embodiment of the present invention;
FIG. 10 is a view illustrating an outline of the example of the prompt for obtaining the information regarding the method for correcting the runtime error in the embodiment of the present invention;
FIG. 11 is a view illustrating an outline of an example of a prompt for obtaining the Python code 23 in which the runtime error has been corrected in the embodiment of the present invention;
FIG. 12 is a view illustrating an outline of an example of a prompt for obtaining information regarding a method for correcting a logic error in the embodiment of the present invention;
FIG. 13 is a view illustrating an outline of the example of the prompt for obtaining the information regarding the method for correcting the logic error in the embodiment of the present invention; and
FIG. 14 is a view illustrating an outline of an example of a prompt for obtaining the Python code 23 in which the logic error has been corrected in the embodiment of the present invention.

### DETAILED DESCRIPTION

Hereinafter, an embodiment of the present invention will be described in detail with reference to the accompanying drawings. In all the drawings for illustrating the embodiment, the same parts are denoted by the same reference numerals in principle, and duplicated descriptions thereof will be omitted. Meanwhile, a component described with a reference numeral with reference to one drawing may be mentioned again with the same reference numeral in the description with reference to other drawings in which the component is not illustrated.

### <Outline>

A source code conversion system, which is the embodiment of the present invention, is an information processing system (or program) that converts source code of COBOL of a legacy system or the like into source code of Python with high accuracy by appropriately using machine conversion together in consideration of characteristics ("fluctuation" of response, hallucination, an upper limit of the number of tokens, and the like) of generative AI.

### <System Configuration>

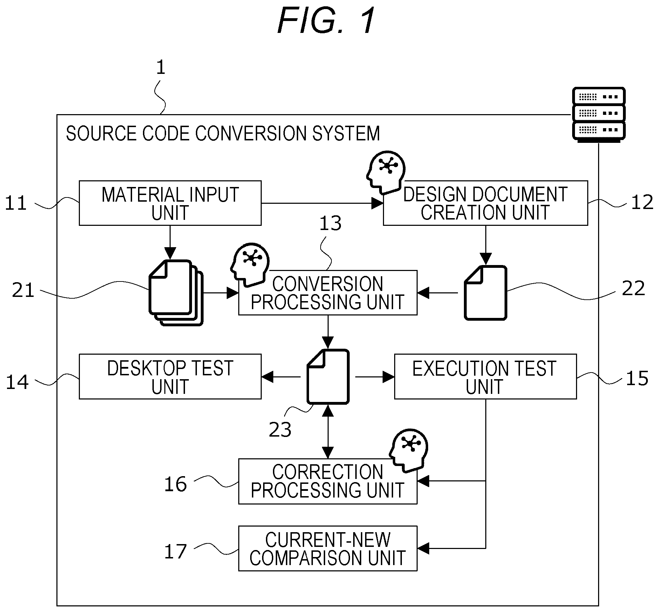

FIG. 1 is a diagram illustrating an outline of a configuration example of the source code conversion system that is the embodiment of the present invention. A source code conversion system 1 is an information processing system that is constituted by, for example, a server device, a virtual server constructed on a cloud computing service, an information processing terminal, and the like, and achieves various functions for converting source code of COBOL to Python with a central processing unit (CPU) (not illustrated) executing middleware such as an operating system (OS), a database management system (DBMS), and a web server program loaded on a memory from a recording device such as a hard disk drive (HDD) or a solid state drive (SSD), and software operating on the middleware. Note that FIG. 1 illustrates a logical configuration example, and physically, one or more units can be implemented on another device or the virtual server to cooperate.

The source code conversion system 1 includes, for example, units such as a material input unit 11, a design document creation unit 12, a conversion processing unit 13, a desktop test unit 14, an execution test unit 15, a correction processing unit 16, and a current-new comparison unit 17 implemented as software.

The material input unit 11 has a function of receiving input of a material required for source code conversion processing. A user interface for input may be provided, or a place such as a predetermined folder may be simply set and a necessary file or the like may be placed therein. Examples of the material input here may include COBOL test cases and test data (including data of actual input and output in a currently operating system) in addition to COBOL code 21 (a source code body and a file specified by a COPY statement), and may include standardized materials and design materials if there are valid materials.

The design document creation unit 12 has a function of creating a detailed design document 22 by generative AI based on the COBOL code 21. Since the COBOL code 21 is often of a legacy system, and there are many cases where documents such as specifications and design documents are scattered or obsolete and thus are not valid at present, in the present embodiment, the detailed design document 22 is newly created from the COBOL code 21.

The detailed design document 22 is an output as sentences of various types of definition information and the content of the operation and processing analyzed by the generative AI, and is not created for the purpose of being browsed and referred to by a developer, and thus, is not limited to a layout or the like as a "design document", but is used as input data in the conversion processing unit 13 described later. As the generative AI used here, generally available services and the like can be used as appropriate (the same also applies to generative AI used in each unit hereinafter).

The conversion processing unit 13 has a function of converting the COBOL code 21 into Python by the generative AI using the COBOL code 21 and the detailed design document 22 as inputs and outputting Python code 23. Even if only the COBOL code 21 is input, conversion into the Python code 23 can be performed by the generative AI, but due to characteristics of the generative AI, there may be a case where the conversion accuracy is insufficient due to fluctuation of an output result or hallucination. Therefore, in the present embodiment, the detailed design document 22 created from the COBOL code 21 (that is, sentences obtained by analyzing the content of the COBOL code 21) is also input. As a result, it is possible to suppress the output fluctuation and the hallucination due to the generative AI to a certain extent and to improve the conversion accuracy.

The desktop test unit 14 has a function of performing desktop review including a static check of a syntax error or the like for the converted and generated Python code 23. The Python code 23 may be compiled to check the presence or absence of an error. Further, it is also possible to adopt a configuration in which the Python code 23 is automatically corrected by the generative AI for the detected error and recompiled.

The execution test unit 15 has a function of actually executing the Python code 23 (including the compiled one), verifying the presence or absence of a runtime error, and extracting the error. The presence or absence of a runtime error is mechanically determined based on an error message, return code, and other output results. In addition, the correction processing unit 16 has a function of automatically correcting the target Python code 23 by the generative AI when an error is detected in the execution test unit 15 (may have a function of automatically correcting the Python code 23 when the error is detected in the desktop test unit 14).

Regarding the error check and correction in the Python code 23, for example, in a case where the Python code 23 is passed to the generative AI and an instruction such as "please correct any error" is given through a prompt, an attempt is sometimes made to correct an irrelative portion even if there is no error due to the characteristics of the generative AI, and an event that the cycle of verification → error detection → correction does not disappear may occur. Therefore, in the present embodiment, roles are divided such that the presence or absence of a runtime error is mechanically determined by the execution test unit 15 and identification and correction of a cause of the error are performed in the correction processing unit 16 using the generative AI when the error is detected.

The current-new comparison unit 17 has a function of comparing and verifying whether there is a difference in operation between the newly created Python code 23 and the original COBOL code 21. The COBOL code 21 is often a batch program of a legacy system, and output data is uniquely determined for certain input data. Therefore, if the same data as output data from the COBOL code 21 is output from the Python code 23 when the same data as input data for the COBOL code 21 is input to the Python code 23, the Python code 23 can be verified to have no logic problem. As the input data and the output data (that is, test data for verification) for the COBOL code 21 used here, for example, actual data in a currently operating system can be input via the material input unit 11.

### <Flow of Processing>

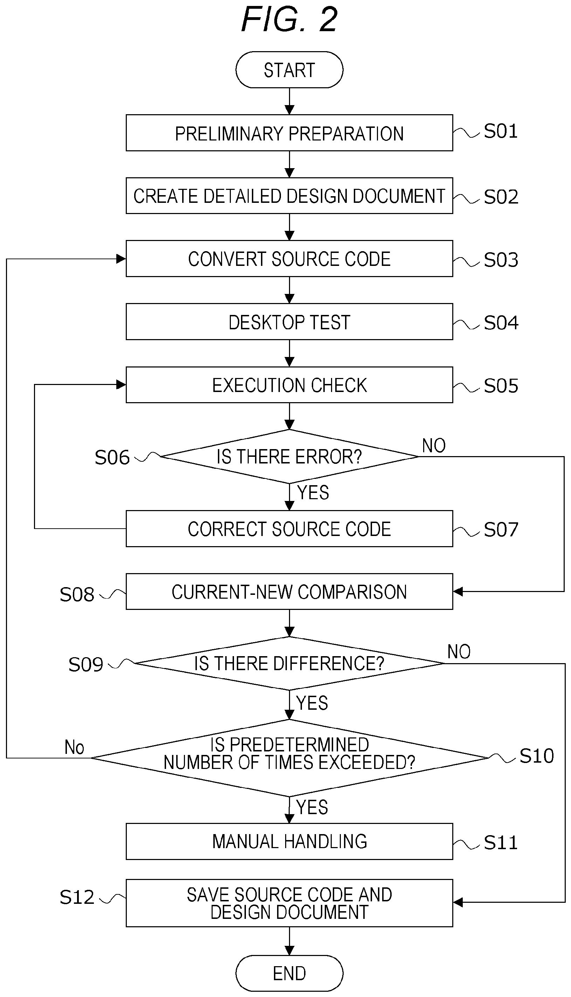

FIG. 2 is a flowchart illustrating an outline of an example of a flow of processing of source code conversion in the embodiment of the present invention. First, a user inputs a material (the COBOL code 21 to be converted, a valid material, or the like) necessary for the source code conversion to the source code conversion system 1 via the material input unit 11, and performs preliminary preparation processing of extracting and organizing necessary information (S01).

In general, in the COBOL program, a plurality of subroutines and external files are often closely dependent on each other, and it may be difficult to obtain sufficient conversion accuracy unless the generative AI can understand such a dependency relationship. Therefore, in the present embodiment, a set of all related files including subroutines is input as the COBOL code 21. As a result, the generative AI can accurately grasp the context and dependency relationship of the entire program, and the conversion accuracy can be improved. In addition, input/output data when the COBOL code 21 is executed for later test or the like is also input. Note that the necessary material is input by being arranged in, for example, a folder or a directory that can be referred to by the conversion processing unit 13.

In the preliminary preparation, the material input unit 11 (or the conversion processing unit 13) extracts necessary information from the input COBOL code 21 and the like. For example, the content of DATA DIVISION and PROCEDURE DIVISION are extracted from the COBOL code 21 (main COBOL code) using a Python program. Then, a file name called by a COPY statement is extracted from DATA DIVISION by a regular expression, a file name of an external program called by a CALL statement is extracted from PROCEDURE DIVISION by a regular expression, and source code of the extracted file is read.

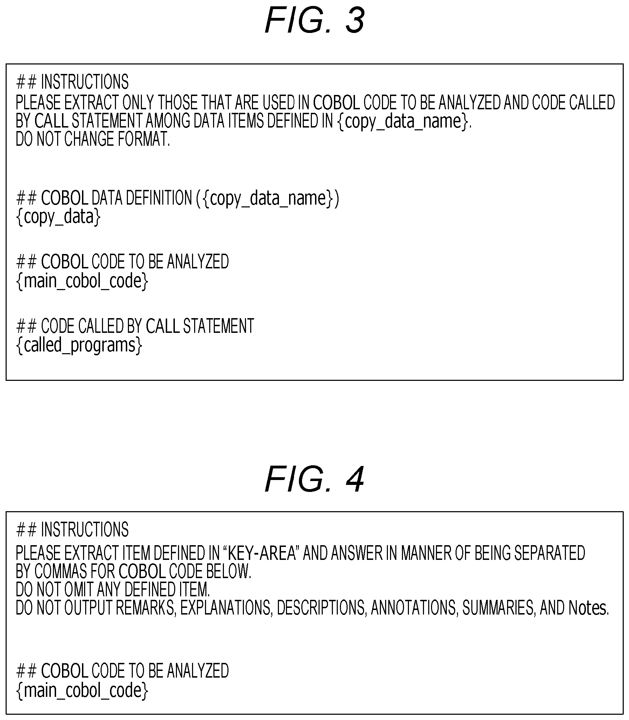

In addition, in the COBOL code 21, a file called by a COPY statement in a constant definition area is extracted by a regular expression, and all constant definitions are extracted from the content of the extracted file. Then, among all the extracted constant definitions, a constant definition used in the COBOL code 21 and code of the external program called by the CALL statement is extracted. This processing can be performed by inputting, to the generative AI, a prompt, for example, as illustrated in the example of FIG. 3. (The example in the drawing is a prototype, and content is set in a variable portion to create an actual prompt. The same also applies to examples of prompts illustrated in the following drawings).

In the preliminary preparation, an item defined as a file name called by a COPY statement is extracted from FILE SECTION of the COBOL code 21 by a regular expression using a Python program as extraction of an item used for file expansion.

When a prompt as illustrated in an example of FIG. 4 is input to the generative AI, a key item used in control break processing is extracted from the COBOL code 21, and the key item in the COBOL code 21 is searched using the Python program to acquire the number of bytes of the key item (a start position and an end position of the key item). The above content acquired in the preliminary preparation is recorded as, for example, a variable and/or a file in the Python program.

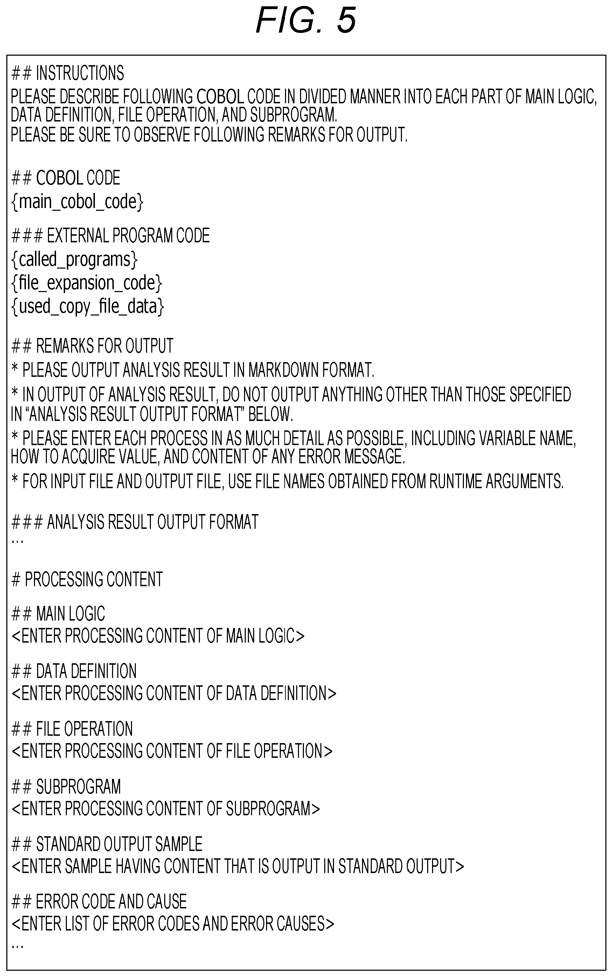

Returning to FIG. 2, after the above-described preliminary preparation, as conversion processing, the design document creation unit 12 first creates the detailed design document 22 from the COBOL code 21 using the generative AI (S02). For example, as illustrated in the example of FIG. 5, a material to be analyzed (the COBOL code 21, content extracted in the preliminary preparation, or the like), remarks in outputting the detailed design document 22, and a prompt including an instruction for a format at the time of output, output content, or the like are input to the generative AI, thereby obtaining the detailed design document 22.

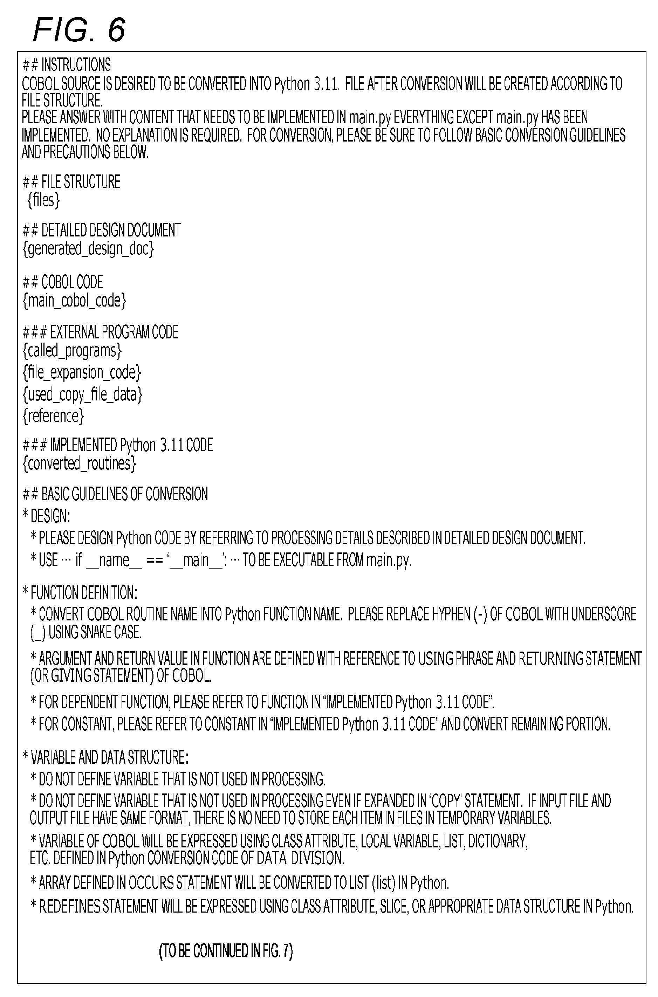

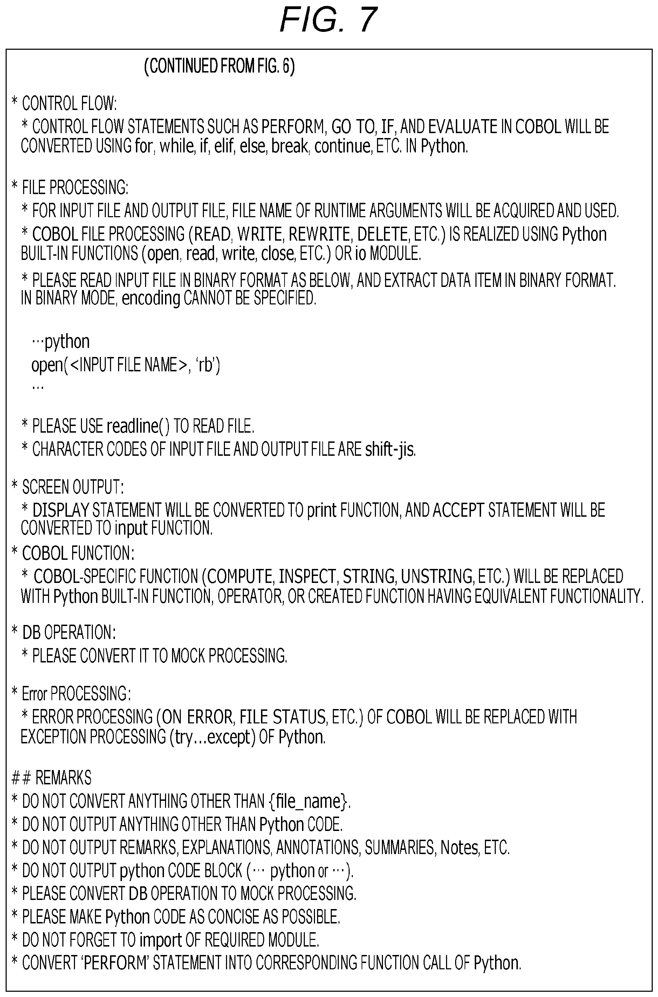

Thereafter, the conversion processing unit 13 converts the COBOL code 21 into Python by the generative AI to obtain the Python code 23 with the COBOL code 21 and the detailed design document 22 as input (S03). For example, as illustrated in an example in FIGS. 6 and 7, the Python code 23 is obtained by inputting, to predetermined generative AI, a prompt including an instruction for specification of the COBOL code 21 to be converted, the detailed design document 22 to be referred to, an external file, and the like, and a basic policy, remarks, and the like for conversion.

For conversion from the COBOL code 21 to the Python code 23, it is necessary for the generative AI to understand a difference in specification between languages of COBOL and Python in order to appropriately convert syntax, which uses a memory management mechanism unique to COBOL or a data structure, into Python. Therefore, in the present embodiment, it is assumed that information regarding the difference in specification between COBOL and Python is explicitly learned as few-shot in the prompt input to the generative AI.

For example, a type definition and the number of digits of a variable appearing in the Python code 23 are not newly generated from the COBOL code 21, but are simply extracted from the COBOL code 21. When these are also converted by the generative AI, fluctuation or hallucination may occur in the output due to the characteristics of the generative AI, resulting in inaccurate conversion, and a processing load is also applied to the generative AI. Therefore, in the present embodiment, it is assumed that a portion requiring strict conversion (portion that needs to be converted to the same result each time and does not need to be newly generated), such as the type definition and the number of digits of the variable, is not converted by the generative AI, but converted by machine conversion using a regular expression or the like in the above-described preliminary preparation and output as an intermediate file, and a result thereof is used in conversion processing by the generative AI (the portion subjected to the machine conversion is excluded from a conversion target).

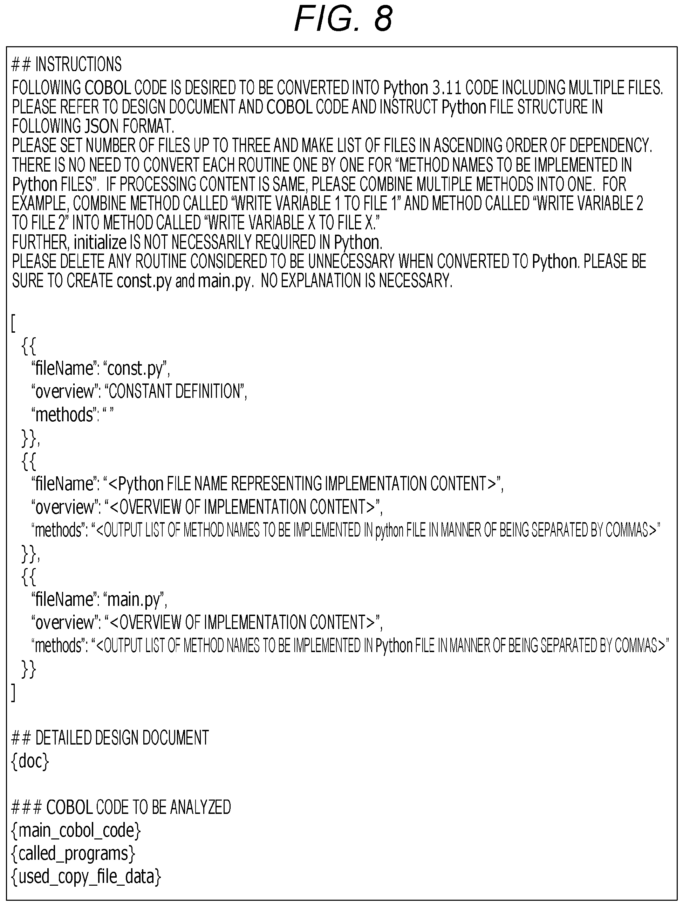

If the entire COBOL code 21 is converted by the generative AI at once, there may be a case where conversion cannot be performed to the end due to a restriction of an upper limit of the number of tokens of the output. In this case, the COBOL code 21 is divided into several parts and converted individually, and conversion results are combined to obtain the Python code 23. However, for example, when the COBOL code 21 is divided and converted for each subroutine or each file, the number of times of conversion processing in the generative AI increases, and it takes time. Therefore, in the present embodiment, as an appropriate unit of division, a prompt as illustrated in FIG. 8 is input to the generative AI to propose an appropriate portion that can be extracted as logic from the COBOL code 21 as a conversion source so as not to exceed the upper limit of the number of tokens and not to increase the number as many as the number of subroutines or files.

Returning to FIG. 2, after the source code is converted into Python, the desktop test unit 14 performs a static check (desktop check) of a syntax error or the like regarding the obtained Python code 23 (S04). For example, it is confirmed by a regular expression or the like using the Python program that essential elements and descriptions are included in the obtained Python code 23.

In addition, a portion indicating the number of bytes of a key item in the Python code 23 may be searched by a regular expression using the Python program to check whether the portion matches the number of bytes of each key item acquired from the COBOL code 21 in the above-described preliminary preparation. When there is a difference, the portion may be replaced with the number of bytes of the key item acquired from the COBOL code 21 (or uniformly replaced) (since the number of bytes of the key item is sometimes incorrect in the Python code 23 generated by the generative AI).

Thereafter, the Python code 23 is further actually executed by the execution test unit 15 (S05) to determine the presence or absence of a runtime error using the Python program from the content of a standard output of the execution result, an error message, and the like (S06). In a case where the execution test unit 15 detects the runtime error (Yes in step S06), the correction processing unit 16 corrects the Python code 23 using the generative AI (S07), returns to step S05 to perform an execution test again, and repeats the processing of steps S05 to S07 until no error is detected (No in step S06).

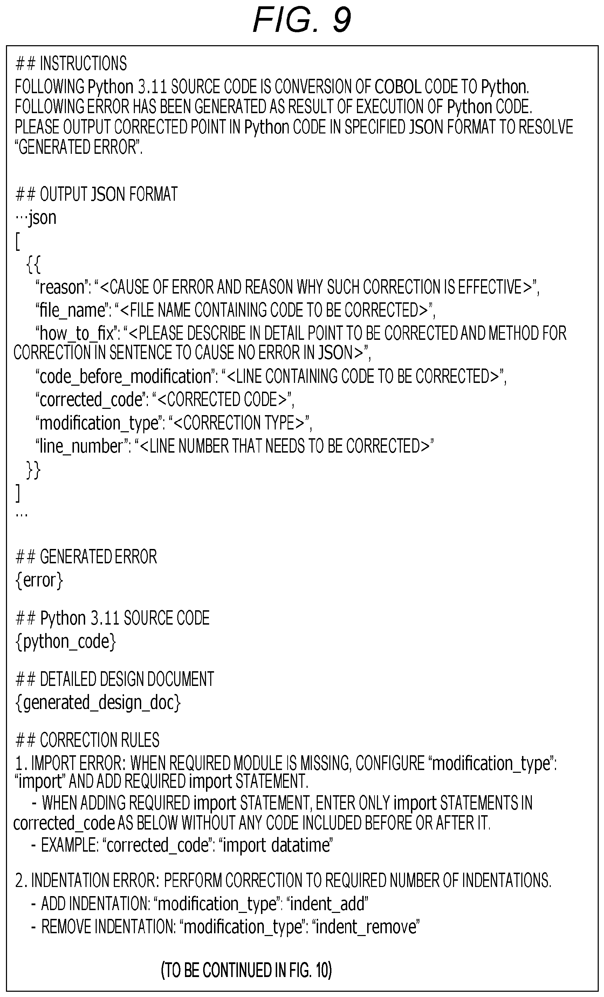

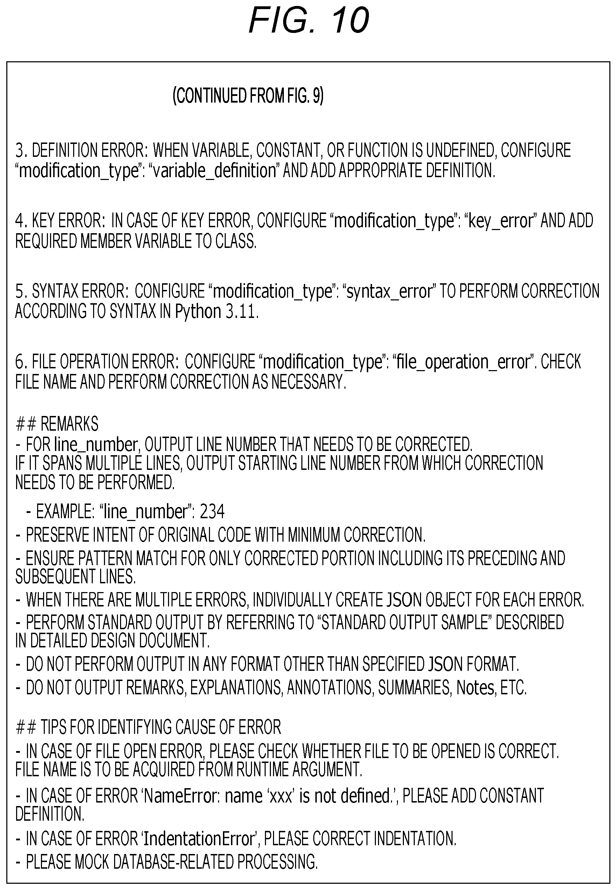

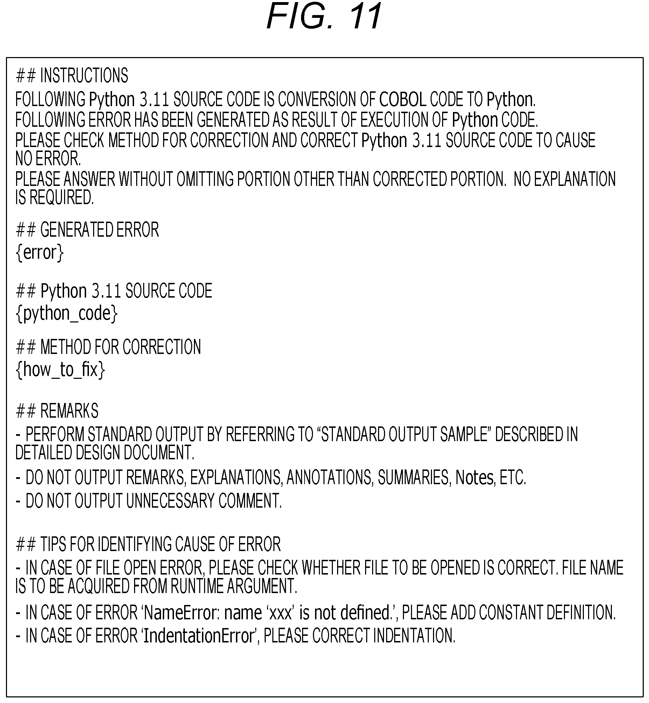

For correction of the Python code 23, for example, a prompt as illustrated in an example in FIGS. 9 and 10 is input to the generative AI, so that information regarding a method for correction the runtime error, such as a cause of the error, a file of the Python code 23 including the cause, a point to be corrected and a correction method, a code to be corrected, a type of correction, and a line number required to be corrected, is output and proposed based on the Python code 23, the error message, the detailed design document 22, and the like. Then, a prompt as illustrated in an example of FIG. 11 is input to the generative AI based on these pieces of information, thereby generating the Python code 23 in which the cause of the runtime error has been corrected.

If the number of tokens is large during correction of the Python code 23 by the generative AI, there may be a case where the generative AI cannot output the corrected Python code 23 at once and needs to perform correction in a divided manner. At this time, it is necessary to perform a process of mechanically combining the corrected Python code 23 output in a divided manner, but there is a case where a new error occurs due to inconsistency in such combined portions. To cope with this, in the present embodiment, for example, in correction of first source code in step S07, in a case where the number of tokens in the corrected Python code 23 exceeds the upper limit of the output of the generative AI, a cause of an error and the source code before and after correction of a correction target portion are limited to be output to the generative AI, and thereafter, reflection and application of the corrected source code to the Python code 23 are mechanically performed independently of the generative AI.

Returning to FIG. 2, when the runtime error disappears (No in step S06), the current-new comparison unit 17 performs the current-new comparison as to whether there is no difference in operation between the newly created Python code 23 and the original COBOL code 21 (S08). Here, as described above, the same data as the input data for the COBOL code 21 is input to the Python code 23, and whether there is a difference between the output data from the COBOL code 21 and the output data from the Python code 23 is determined by the Python program (S09). In a case where there is no difference between the both (No in step S09), the Python code 23, the detailed design document 22, and the like obtained by the series of processing are saved, and the conversion processing ends.

On the other hand, when there is a difference between the both (Yes in step S09), there is a problem in logic of the Python code 23, and thus the processing after the conversion from the COBOL code 21 to the Python code 23 is repeated again by returning to step S03.

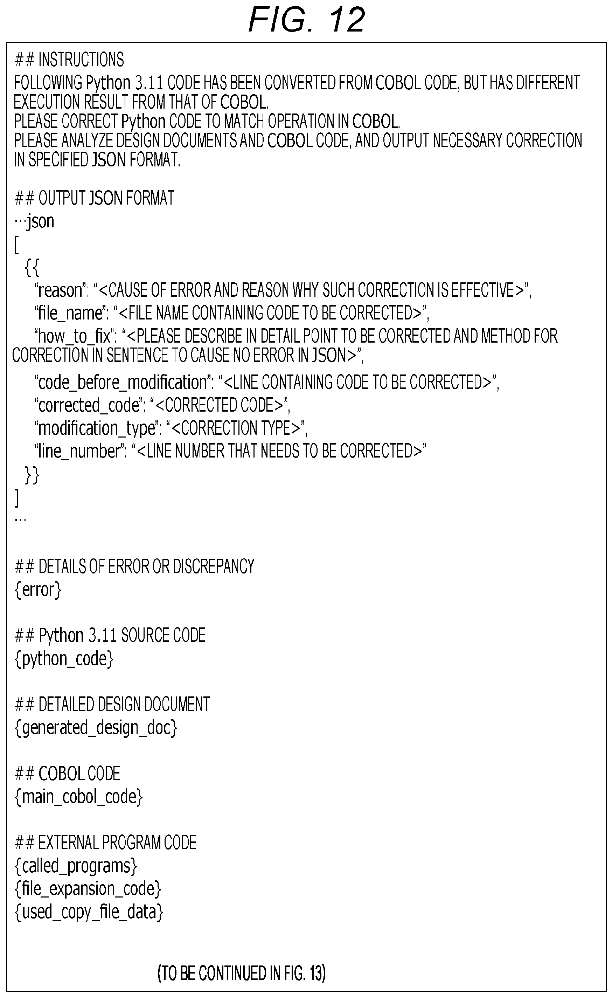

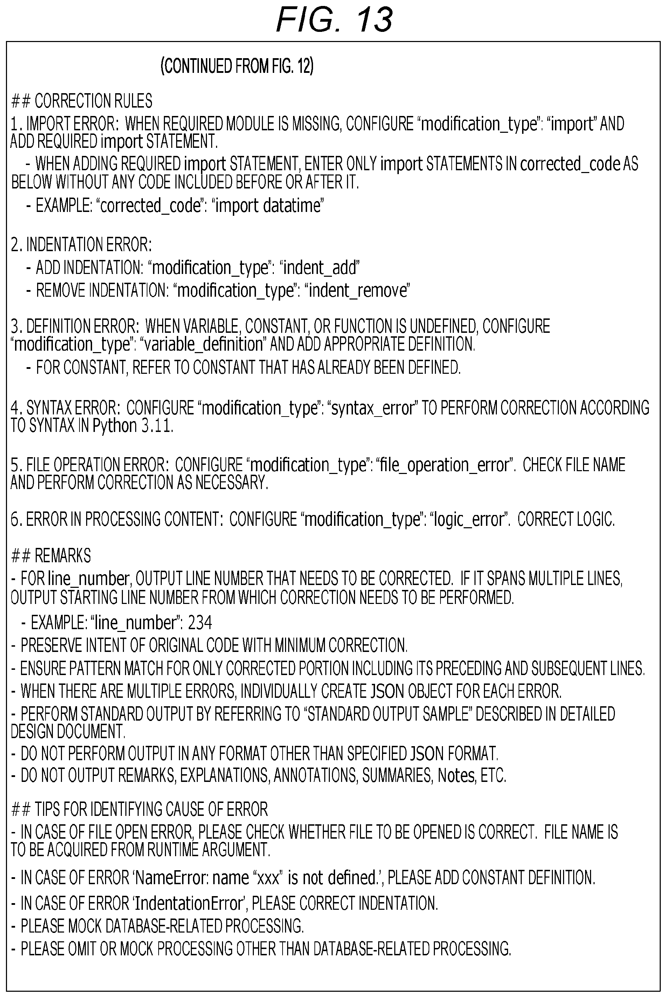

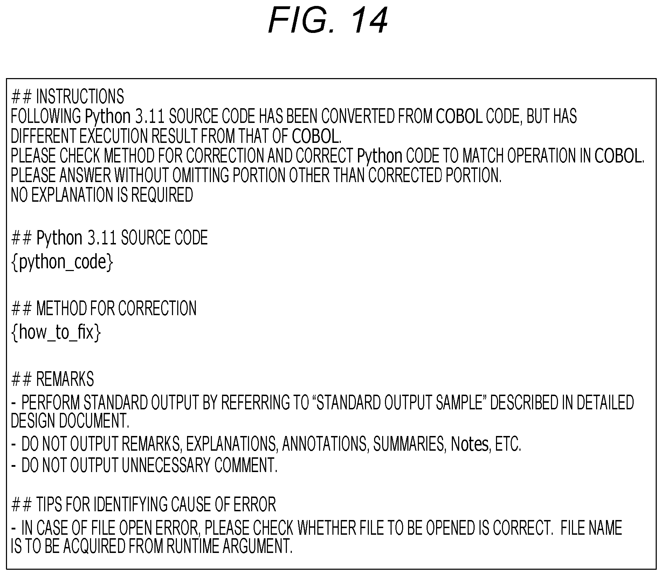

At this time, the correction processing unit 16 inputs, for example, a prompt as illustrated in an example of FIGS. 12 and 13 to the generative AI, so that information regarding a method for correcting a logic error, such as a cause of the error, a file of the Python code 23 including the cause, a point to be corrected and a correction method, a code to be corrected, a type of correction, and a line number required to be corrected, is output and proposed based on the Python code 23, an error message, the detailed design document 22, and the like. Then, a prompt as illustrated in an example of FIG. 14 is input to the generative AI based on these pieces of information, thereby generating the Python code 23 in which the cause of the logic error has been corrected.

Note that, due to the characteristics of the generative AI that fluctuation may occur in the generated Python code 23, there may be a case where convergence is not achieved (the difference continues to appear in the current-new comparison in steps S08 and S09 in FIG. 2) even if the correction processing is repeated. Therefore, in the present embodiment, it is determined whether the number of times that the difference is determined to be present exceeds a predetermined threshold (for example, 10 times, 20 times, or the like) (S10). In a case where the number of times does not exceed the threshold (No in step S10), the processing is repeated by returning to step S03. On the other hand, in a case where the number of times exceeds the threshold (Yes in step S10), the automatic conversion processing is terminated and the user manually copes with the difference.

As described above, according to the source code conversion system 1 that is the embodiment of the present invention, the COBOL code 21 of the legacy system or the like can be converted into the Python code 23 with high accuracy by appropriately using machine conversion together in consideration of the characteristics ("fluctuation" of response, hallucination, the upper limit of the number of tokens, and the like) of the generative AI. In the present embodiment, the COBOL code 21 is converted into the Python code 23, but the present embodiment can also be applied to a case where the COBOL code 21 is converted into another language such as Java.

Although the invention made by the present inventors has been specifically described above based on the embodiment, the present invention is not limited to the above embodiment, and it goes without saying that various modifications can be made without departing from the gist of the present invention. The above embodiment has been described in detail in order to explain the present invention in an understandable manner, and the present invention is not necessarily limited to one including all the configurations described. Another configuration can be added to, deleted from, and replaced with a part of the configuration of the above-described embodiment.

Part or all of the above-described configurations, functions, processing units, processing means and the like may be implemented by hardware by being designed as an integrated circuit or the like, for example. Alternatively, the above configurations, functions, and the like, may be implemented by software by a processor interpreting and executing a program that implements each function. Information such as programs, tables, and files for implementing each function may be stored in a recording device such as a memory, a hard disk, or an SSD, or in a recording medium such as an integrated circuit (IC) card, a secure digital (SD) card, or a digital versatile disc (DVD).

The above drawings illustrate control lines and information lines that are considered necessary for the description and do not necessarily illustrate all the implemented control lines and information lines. It may be considered that almost all the configurations are mutually connected in practice.

The present invention is applicable to a source code conversion system that converts source code of COBOL into Python source code.

## Claims

1. A source code conversion system that converts first source code in COBOL into second source code in another language, the source code conversion system comprising:
a design document creation unit configured to create design information related to the first source code from the first source code by generative AI;
a conversion processing unit configured to create the second source code obtained by converting the first source code into the another language by the generative AI from information including the first source code and the design information;
an execution test unit configured to detect presence or absence of an error from an execution result based on the second source code; and
a correction processing unit configured to correct the second source code based on a cause of the error by the generative AI when the error is detected by the execution test unit.

2. The source code conversion system according to claim 1, further comprising
a current-new comparison unit configured to determine presence or absence of a difference between first output data output as an execution result based on the first source code in response to predetermined input data and second output data output as an execution result based on the second source code in response to the predetermined input data.

3. The source code conversion system according to claim 1, wherein,
when creating the second source code from the first source code by the generative AI, the conversion processing unit instructs the generative AI on information regarding a difference in specification between the COBOL and the another language.

4. The source code conversion system according to claim 1, wherein,
when creating the second source code from the first source code, the conversion processing unit converts a predetermined matter in the first source code into the another language by machine conversion, and converts a matter other than the predetermined matter into the another language by the generative AI.

5. The source code conversion system according to claim 1, wherein
the conversion processing unit converts the first source code divided into a plurality of portions into the another language by the generative AI, and combines conversion results to create the second source code.

6. The source code conversion system according to claim 1, wherein the first source code includes all subroutines and related external files.
